# EUROPÄISCHE PATENTSCHRIFT

(11) **EP 0 547 362 B1**
(45) Veröffentlichungstag und Bekanntmachung des Hinweises auf die Patenterteilung: **26.07.1995**
(21) Anmeldenummer: 92119039.3
(22) Anmeldetag: 06.11.1992
(51) Int. Cl.: B64D 11/00

(54) **Vorrichtung zur Unterteilung einer Flugzeugkabine**
Aircraft cabin divider
Dispositif pour diviser une cabine d'avion

(30) Priorität: 17.12.1991 DE 4141606
(43) Veröffentlichungstag der Anmeldung: 23.06.1993
(73) Patentinhaber: Daimler-Benz Aerospace Airbus Gesellschaft mit beschränkter Haftung, 21129 Hamburg (DE)
(72) Erfinder: Schneider, Uwe, W-2807 Achim (DE); Schumacher, Markus, W-2150 Buxtehude (DE)
(74) Vertreter: Hansmann, Dierk, Dipl.-Ing.

(56) Entgegenhaltungen:
- EP-A- 0 361 717
- AU-B- 523 380
- US-A- 2 710 731
- US-A- 4 185 799

## Beschreibung

Die Erfindung betrifft eine Vorrichtung zur Unterteilung einer Flugzeugkabine, die einen zur Halterung eines Vorhanges vorgesehenen Träger sowie eine den Träger mit einer Kabinenstruktur verbindende Fixierung aufweist. Ähnliche Vorrichtungen sind z.B. aus der AU-B-523 380 bekannt.

Derartige Vorrichtungen werden insbesondere als sogenannte Klassenteiler verwendet. Zur Durchführung einer veränderlichen Unterteilung der Reiseklassen, die an das jeweilige Fluggastaufkommen angepaßt wird, ist die Vorrichtung mit Adaptern versehen, die in Kanäle einführbar sind und die unterhalb der Handgepäckaufnahme verlaufen. Die Adapter werden in diese Kanäle durch Anheben sowie eine entsprechende Einführbewegung eingesetzt. Im Bereich der Versorgungskanäle erfolgt dann ein Einrasten, das ein Herausfallen der Vorrichtung vermeidet.

Es hat sich in der Praxis gezeigt, daß das Einsetzen der bekannten Vorrichtungen einen vergleichsweise hohen Kraftaufwand erfordert, da sowohl eine Gegenkraft zum Eigengewicht der Vorrichtung als auch die erforderliche Einsatzkraft aufgebracht werden muß. Eine derartige Tätigkeit ist insbesondere für kleinere Personen nur schwierig durchführbar. Bei einem unzureichenden Einsetzen besteht darüber hinaus die Gefahr, daß die vorgesehene Einrastung nicht erfolgt und somit ein Lösen der Vorrichtung durch herausrutschen aus dem Versorgungskanal besteht. Hierbei können Beschädigungen und Verletzungen der Passagiere auftreten.

Der Einführvorgang der Adapter in die Versorgungskanäle ist darüber hinaus optisch nur sehr schwer überprüfbar. Dieses führt dazu, daß der Adapter zunächst in einer Umgebung der vorgesehenen Einführöffnung an der Wandung des Versorgungskanals bzw. der Unterseite der Gepäckablage entlang rutscht. Bei einem länger andauernden Betrieb resultieren hieraus erhebliche Kratzspuren, die das optische Erscheinungsbild beeinträchtigen.

Aufgabe der vorliegenden Erfindung ist es daher, eine Vorrichtung der einleitend genannten Art derart zu verbessern, daß eine Montage in einfacher Weise und mit geringem Kraftaufwand durchführbar ist und eine einwandfreie Halterung gewährleistet wird.

Diese Aufgabe wird erfindungsgemäß dadurch gelöst, daß der Träger als ein Rahmen ausgebildet ist, der im Bereich seiner in lotrechter Richtung unteren Ausdehnung mindestens ein die Fixierung ausbildendes Kupplungselement aufweist, das mit einer Gegenkupplung im Bereich der Kabinenstruktur lösbar verbindbar ist.

Die Anordnung des Kupplungselementes im Bereich einer in lotrechter Richtung unteren Ausdehnung der Vorrichtung ermöglicht es, die Vorrichtung unter Zuhilfenahme der Schwerkraft in die dafür vorgesehene Gegenkupplung einzusetzen. Im Gegensatz zu den bisher bekannten Ausführungsformen wirkt somit die Schwerkraft einer Montage der Vorrichtung nicht entgegen, sondern unterstützt diese sogar. Durch die erfindungsgemäße Anordnung des Kupplungselementes ist darüber hinaus gewährleistet, daß die Montage von einer Bedienperson optisch gut überwacht werden kann und es der Bedienperson ermöglicht wird, während des Montagevorganges eine Ermüdungen und Verspannungen vermeidende Körperhaltung einzunehmen.

Ein besonders einfaches Einsetzen der Kupplungselemente in die Gegenkupplungen wird vorzugsweise dadurch ermöglicht, daß das Kupplungselement zapfenförmig in eine als Gegenkupplung ausgebildete Ausnehmung eingreift, die in einem in lotrechter Richtung hinteren Bereich einer Armlehne angeordnet ist, die als Teil eines die Kabinenstruktur ausbildenden Sitzes vorgesehen ist. Durch diese Verbindung des Trägers mit den Flugzeugsitzen erfolgt automatisch eine Positionsveränderung der Kabinenunterteilung bei einer Verschiebung der jeweiligen Sitze. Eine separate Verstellung der Unterteilungen bzw. separate Führungsschienen werden dadurch vermieden.

Eine Montage, die auch hohen mechanischen Belastungen widersteht, wird vorzugsweise dadurch ermöglicht, daß das Kupplungselement zapfenförmig ausgebildet ist und sich abgewinkelt zu Seitenschenkeln des Trägers erstreckt sowie von einer als Gegenkupplung ausgebildeten Ausnehmung aufnehmbar ist, die im Bereich eines die Kabinenstruktur ausbildenden rückwärtigen Querträgers eines Gestelles eines Sitzes angeordnet ist.

Ein besonders stabiler Aufbau kann dadurch bereitgestellt werden, daß das Kupplungselement als Teil eines Ständers ausgebildet ist, der eine Basistraverse des Trägers mit einer Sitzschiene verbindet.

Eine besonders wenig Kraft erfordernde Montage der Vorrichtung wird vorzugsweise dadurch ermöglicht, daß sich das Kupplungselement im wesentlichen in Richtung von Längsachsen der Seitenschenkel erstreckt. Grundsätzlich ist es aber auch möglich, daß sich das Kupplungselement im wesentlichen abgewinkelt zu einer Längsachse der Seitenschenkel erstreckt.

Zur Bereitstellung eines kompakten und leichten Aufbaues wird vorgeschlagen, daß eine den Träger in lotrechter Richtung oben begrenzende Quertraverse als Schiene für den Vorhang ausgebildet ist.

Eine sichere Fixierung der Kupplungselemente im Bereich der Gegenkupplungen bei Verwendung leichter Bauelemente wird vorzugsweise dadurch ermöglicht, daß das Kupplungselement von einem Schnappverschluß lösbar im Bereich der Gegenkupplung fixiert ist.

Ein leichter Aufbau kann auch dadurch gewährleistet werden, daß der Träger mit der Quertraverse und zwei Seitenschenkeln ein U-Profil ausbildet. Zur Erzielung einer hohen mechanischen Stabilität ist es auch möglich, daß der Träger als ein im wesentlichen geschlossener Rahmen ausgebildet ist.

In der Zeichnung sind Ausführungsbeispiele der Erfindung schematisch dargestellt. Es zeigen:
- Fig. 1: einen Querschnitt durch eine Flugzeugkabine mit einer konventionellen Anordnung der Vorrichtung,
- Fig. 2: eine Vorrichtung, die auf hintere Enden der Armlehnen aufgesteckt werden kann,
- Fig. 3: eine Vorrichtung, die im Bereich einer rückwärtigen Querstruktur eines Sitzgestelles einsteckbar ist **und**
- Fig. 4: eine Vorrichtung, die von Sitzschienen gehaltert ist.

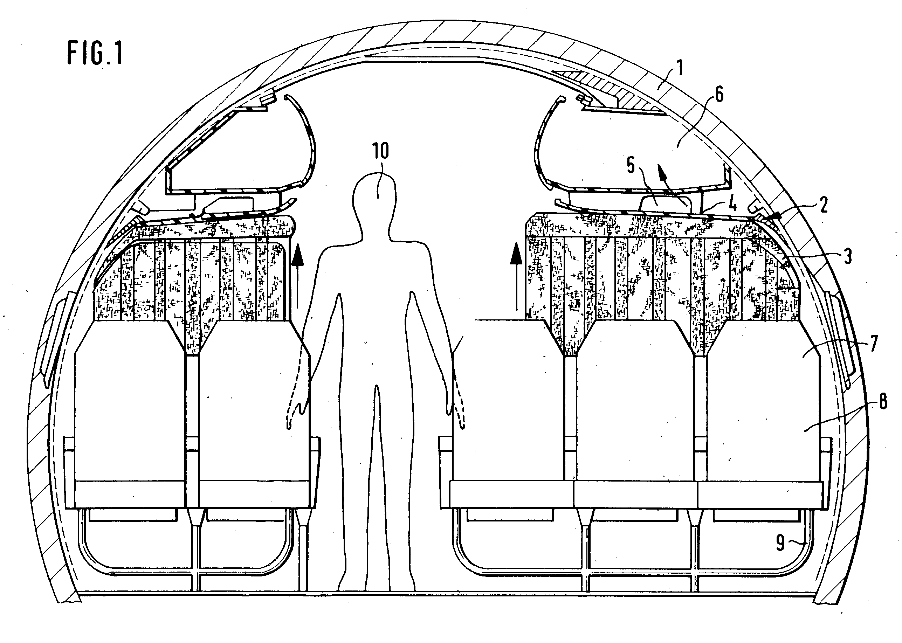

Die Vorrichtung zur Unterteilung einer Flugzeugkabine (1) besteht im wesentlichen aus einem Träger (2), der einen Vorhang (3) haltert. Bei der in Figur 1 dargestellten konventionellen Ausführung weist der Träger (2) im Bereich seiner in lotrechter Richtung oberen Ausdehnung einen Adapter (4) auf, der in lotrechter Richtung von unten in einen Versorgungskanal (5) einführbar ist, der sich unterhalb einer Handgepäckablage (6) erstreckt.

Die Unterteilung der Flugzeugkabine (1) erfolgt im Bereich von Rückenlehnen (7) von Sitzen (8), die von einem Gestell (9) gehaltert werden. Zur Einführung der Adapter (4) in den Versorgungskanal (5) ist es erforderlich, daß eine Bedienperson (10) entgegen der auf den Träger (2) einwirkenden Schwerkraft die Vorrichtung anhebt und unter Überwindung von Widerstandskräften den Adapter (4) in den Versorgungskanal (5) einführt.

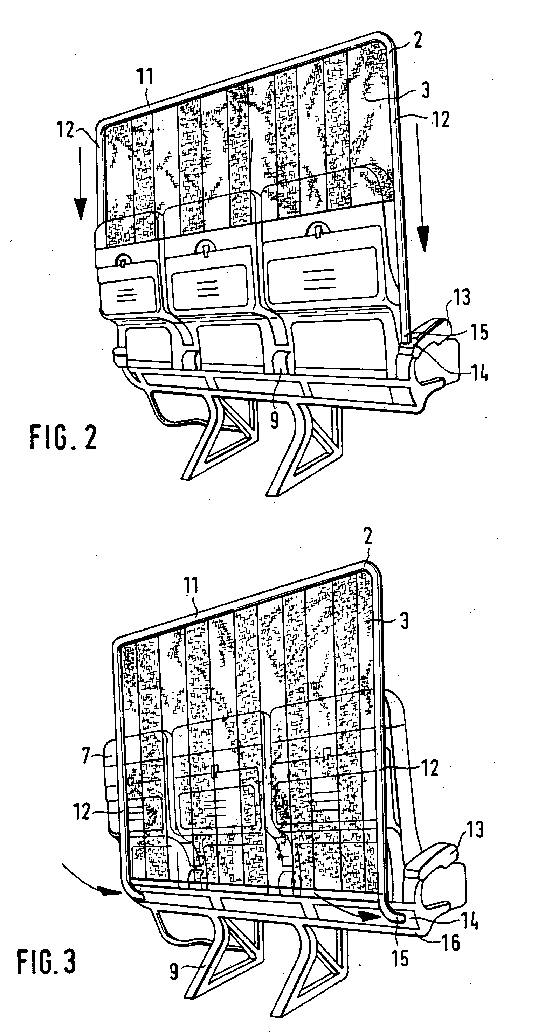

Bei der Ausführungsform gemäß Figur 2 ist der Träger (2) aus einer Quertraverse (11) sowie Seitenschenkeln (12) ausgebildet, die gemeinsam ein U-Profil aufspannen. Die in lotrechter Richtung unteren Enden der Seitenschenkel (12) sind in Ausnehmungen einführbar, die im Bereich von hinteren Enden von Armlehnen (13) der Sitze (8) angeordnet sind. Die Ausnehmungen im Bereich der Armlehnen (13) bilden Gegenkupplungen (14) aus, in die die als Kupplungselemente (15) ausgebildeten Enden der Seitenschenkel (2) einführbar sind. Zur Durchführung einer Verbindung der Kupplungselemente (15) mit den Gegenkupplungen (14) ist es lediglich erforderlich, den Träger (2) in lotrechter Richtung nach unten abzusenken.

Bei der Ausführungsform gemäß Figur 3 ist der Träger (2) gleichfalls im wesentlichen u-förmig ausgebildet. Im Bereich ihrer in lotrechter Richtung unteren Enden laufen die Seitenschenkel (12) jedoch abgewinkelt. Dies führt dazu, daß die Kupplungselemente (15) im wesentlichen vertikal in die Gegenkupplungen (14) eingeführt werden können. Die Gegenkupplungen (14) sind hierbei ebenfalls als Ausnehmungen ausgebildet und im Bereich eines rückwärtigen Querträgers (16) des Gestelles (9) angeordnet.

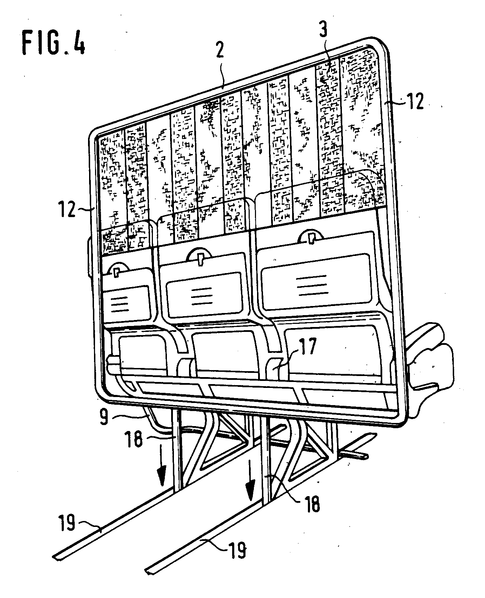

In Figur 4 ist eine Ausführungsform dargestellt, bei der der Träger (2) rahmenförmig ausgebildet ist. Eine in lotrechter Richtung unten angeordneten Basis der Traverse (17), die die Seitenschenkel (12) untereinander verbindet, ist über Ständer (18) mit Sitzschienen (19) verbunden, in denen die Gestelle (9) der Sitze (8) ebenfalls gehaltert sind. Das Einsetzen der Ständer (18) in die Sitzschienen (19) erfolgt hier wieder in einer lotrechten Richtung.

Eine Verbindung der Kupplungselemente (15) mit den Gegenkupplungen (14) kann bei allen Ausführungsformen beispielsweise über federnd gelagerte Schnappelemente erfolgen. Ein federnd gelagertes Verriegelungsteil greift hierbei in einer Verriegelungspositionierung formschlüssig in eine Ausnehmung ein, aus der es zur Lösung der Verbindung durch eine geeignete Bedienkraft entfernt werden kann.

## Patentansprüche

1. Vorrichtung zur Unterteilung einer Flugzeugkabine, wobei die Vorrichtung einen zur Halterung eines Vorhanges vorgesehenen Träger sowie eine den Träger mit einer Kabinenstruktur verbindende Fixierung aufweist, dadurch gekennzeichnet, daß der Träger (2) als ein Rahmen ausgebildet ist, der im Bereich seiner in lotrechter Richtung unteren Ausdehnung mindestens ein die Fixierung ausbildendes Kupplungselement (15) aufweist, das mit einer Gegenkupplung (14) im Bereich der Kabinenstruktur lösbar verbindbar ist.

2. Vorrichtung nach Anspruch 1, dadurch gekennzeichnet, daß das Kupplungselement (15) zapfenförmig in eine als Gegenkupplung (14) ausgebildete Ausnehmung eingreift, die in einem in lotrechter Richtung hinteren Bereich einer Armlehne (13) angeordnet ist, die als Teil eines die Kabinenstruktur ausbildenden Sitzes (8) vorgesehen ist.

3. Vorrichtung nach Anspruch 1, dadurch gekennzeichnet, daß das Kupplungselement (15) zapfenförmig ausgebildet ist und sich abgewinkelt zu Seitenschenkeln (12) des Trägers (2) erstreckt sowie von einer als Gegenkupplung (14) ausgebildeten Ausnehmung aufnehmbar ist, die im Bereich eines die Kabinenstruktur ausbildenden rückwärtigen Querträgers (16) eines Gestelles (9) eines Sitzes (8) angeordnet ist.

4. Vorrichtung nach Anspruch 1, dadurch gekennzeichnet, daß das Kupplungselement (15) als Teil eines Ständers (18) ausgebildet ist, der eine Basistraverse (17) des Trägers (2) mit einer Sitzschiene (19) verbindet.

5. Vorrichtung nach einem der Ansprüche 1 bis 4, dadurch gekennzeichnet, daß sich das Kupplungselement (15) im wesentlichen in Richtung von Längsachsen der Seitenschenkel (12) erstreckt.

6. Vorrichtung nach einem der Ansprüche 1 bis 4, dadurch gekennzeichnet, daß sich das Kupplungselement (15) im wesentlichen abgewinkelt zu einer Längsachse der Seitenschenkel (12) erstreckt.

7. Vorrichtung nach einem der Ansprüche 1 bis 6, dadurch gekennzeichnet, daß eine den Träger (12) in lotrechter Richtung oben begrenzende Quertraverse (11) als Schiene für den Vorhang (3) ausgebildet ist.

8. Vorrichtung nach einem der Ansprüche 1 bis 7, dadurch gekennzeichnet, daß das Kupplungselement (15) von einem Schnappverschluß lösbar im Bereich der Gegenkupplung (14) fixiert ist.

9. Vorrichtung nach einem der Ansprüche 1 bis 8, dadurch gekennzeichnet, daß der Träger (2) mit der Quertraverse (11) und zwei Seitenschenkeln (12) ein U-Profil ausbildet.

10. Vorrichtung nach einem der Ansprüche 1 bis 8, dadurch gekennzeichnet, daß der Träger (12) als ein im wesentlichen geschlossener Rahmen ausgebildet ist.

## Claims

1. Device for sub-dividing an aircraft cabin, the device having a carrier provided for the mounting of a curtain as well as a fixing connecting the carrier to a cabin structure, characterized in that the carrier (2) is configured as a frame which in the region of its lower - in vertical direction - extension has at least one coupling element (15) forming the fixing, which coupling element can be detachably connected to a counter-coupling (14) in the region of the cabin structure.

2. Device according to Claim 1, characterized in that the coupling element (15) engages in a peg-like manner in a recess configured as counter-coupling (14) which is arranged in a rear - in vertical direction - region of an armrest (13) which is provided as part of a seat (8) forming the cabin structure.

3. Device according to Claim 1, characterized in that the coupling element (15) is configured in a peg-like manner and extends at an angle to side legs (12) of the carrier (2) and can be accommodated by a recess configured as counter-coupling (14) which is arranged in the region of a rear transverse carrier (16), forming the cabin structure, of a framework (9) of a seat (8)

4. Device according to Claim 1, characterized in that the coupling element (15) is configured as part of an upright (18) which connects a base crosspiece (17) of the carrier (2) to a seat rail (19).

5. Device according to one of Claims 1 to 4, characterized in that the coupling element (15) essentially extends in direction of longitudinal axes of the side legs (12).

6. Device according to one of Claims 1 to 4, characterized in that the coupling element (15) extends essentially at an angle to a longitudinal axis of the side legs (12).

7. Device according to one of Claims 1 to 6, characterized in that a transverse crosspiece (11) limiting the carrier (2) at the top in vertical direction is configured as rail for the curtain (3).

8. Device according to one of Claims 1 to 7, characterized in that the coupling element (15) is detachably fixed by a snap-on closure in the region of the counter-coupling (14).

9. Device according to one of Claims 1 to 8, characterized in that the carrier (2) forms a U-profile with the transverse crosspiece (11) and two side legs (12).

10. Device according to one of Claims 1 to 8, characterized in that the carrier (2) is configured as an essentially enclosed frame.

## Revendications

1. Dispositif destiné au cloisonnement d'une cabine de passagers d'un avion, ledit dispositif présentant un support prévu pour la fixation d'un rideau ainsi qu'une fixation reliant le support à la structure de la cabine, caractérisé en ce que le support (2) est conçu comme un cadre, lequel présente dans la zone de son prolongement inférieur vertical au moins un élément d'accouplement mâle (15) formant la fixation, cet accouplement pouvant être relié avec un élément d'accouplement femelle (14) dans la zone de la structure de la cabine.

2. Dispositif selon la revendication 1, caractérisé en ce que l'élément d'accouplement mâle (15) s'engrène en formant un cône dans un creux conçu comme un élément d'accouplement femelle (14), ce creux étant disposé dans le sens vertical dans une zone arrière d'un accoudoir (13), prévu comme une partie d'un siège formant la structure de la cabine.

3. Dispositif selon la revendication 1, caractérisé en ce que l'élément d'accouplement mâle (15) est conçu en forme de cône et s'étend perpendiculairement par rapport aux montants latéraux (12) du support (2), de même qu'il peut être reçu dans un creux conçu comme un accouplement femelle (14), ce creux étant prévu dans la zone d'une barre support transversale (16) formant la structure de la cabine et constituant le châssis (9) d'un siège (8).

4. Dispositif selon la revendication 1, caractérisé en ce que l'élément d'accouplement mâle (15) est conçu comme une partie d'un pied reliant une traverse de base (17) du support (2) avec un rail d'appui (19).

5. Dispositif selon l'une ou l'autre des revendications 1 à 4, caractérisé en ce que l'élément d'accouplement mâle (15) s'étend principalement dans le sens des axes longitudinaux des montants latéraux (12).

6. Dispositif selon l'une ou l'autre des revendications 1 à 4, caractérisé en ce que l'élément d'accouplement mâle (15) s'étend principalement perpendiculairement par rapport à un axe longitudinal d'un montant latéral (12).

7. Dispositif selon l'une ou l'autre des revendications 1 à 6, caractérisé en ce que une traverse (11) servant de limite supérieure au support (12) et dirigée perpendiculairement à ce support (12) est conçue comme un rail destiné à la fixation du rideau (3).

8. Dispositif selon l'une ou l'autre des revendications 1 à 7, caractérisé en ce que l'élément d'accouplement mâle (15) est fixé de manière détachable et par enclenchement dans l'élément d'accouplement femelle (14).

9. Dispositif selon l'une ou l'autre des revendications 1 à 8, caractérisé en ce que le support (2) forme avec la traverse (11) et deux montants latéraux (12) un profil en forme de U.

10. Dispositif selon l'une ou l'autre des revendications 1 à 8, caractérisé en ce que le support (2) est conçu comme un cadre principalement fermé.
